# FASCICULE DE BREVET EUROPEEN

(11) **EP 3 140 962 B1**
(45) Date de publication et mention de la délivrance du brevet: **03.03.2021**
(21) Numéro de dépôt: 15725846.8
(22) Date de dépôt: 11.05.2015
(51) Int. Cl.: H04L 12/28

(54) **SYSTÈME DE GESTION D'UNE STRUCTURE COMPRENANT UN COFFRET AVEC CONNEXIONS REDONDANTES.**
SYSTEM ZUR VERWALTUNG EINER STRUKTUR MIT EINER BOX MIT REDUNDANTEN VERBINDUNGEN
SYSTEM FOR MANAGING A STRUCTURE INCLUDING A BOX HAVING REDUNDANT CONNECTIONS

(30) Priorité: 09.05.2014 FR 1454189
(43) Date de publication de la demande: 15.03.2017
(73) Titulaire: Solinnov, 75001 Paris (FR)
(72) Inventeur: PATAT, Jean-Louis, F-75017 Paris (FR); DEVEAUX, Nicolas, F-49350 Gennes (FR)
(74) Mandataire: Remy, Vincent Noel Paul
(86) Numéro de dépôt international: PCT/FR2015/051232
(87) Numéro de publication internationale: WO 2015/170061

(56) Documents cités:
- EP-A1- 1 798 840

## Description

La présente invention concerne un dispositif destiné à être connecté sur un tableau.

On connait des systèmes de gestion d'une structure, par exemple d'une habitation, ce système étant connecté à divers mécanismes (tels que des appareils électriques) dans l'habitation, voir par exemple EP1798840, avec pour objectif d'optimiser la consommation d'énergie de cette habitation. Un tel système appartient au domaine de la domotique. Ce système est par exemple un boitier qui est connecté sur le tableau électrique de l'habitation et qui est apte à réceptionner des données externes provenant de l'intérieur et/ou de l'extérieur de l'habitation, et de réagir en fonction de ces données, par exemple à commander tel ou tel mécanisme dans l'habitation. Ainsi, le système peut minimiser la consommation d'énergie dans une pièce en diminuant le chauffage ou en éteignant la lumière à certaines heures de la journée, ou lorsque l'occupant quitte cette pièce. Ces modifications peuvent également être effectuées en fonction de données météorologiques recueillies sur une plateforme, puis transférées au boitier. En option, l'utilisateur peut être informé des changements d'état (lumière éteinte/allumée, chauffage augmenté/diminué) par l'envoi d'un message sur un objet connecté portatif tel qu'un téléphone portable.

De tels dispositifs présentent le désavantage qu'ils sont ciblés vers un seul objectif, le plus souvent effectuer des économies d'énergie. Ils présentent donc une fonctionnalité limitée.
De plus, l'installation et la connexion d'un tel dispositif dans un logement nécessite une adaptation des connexions électriques avec ce dispositif ou l'adoption d'une technologie spécifique propriétaire (par exemple utilisant des ondes radio). En conséquence, si des fonctions différentes sont souhaitées par l'utilisateur (par exemple en cas de changement de propriétaire du logement), le dispositif actuel doit être enlevé, et un dispositif modifié (avec des connexions modifiées) doit être installé à sa place, ce qui est coûteux et prend du temps.

La présente invention vise à remédier à ces inconvénients. L'invention vise à proposer un dispositif selon la revendication 1 qui est destiné à être connecté sur un tableau qui est relié par des circuits à des actionneurs, à des mécanismes, et à des récepteurs aptes à recevoir des données, qui permette de gérer une structure électrique, telle qu'une habitation ou un véhicule, et qui présente une modularité afin de remplir une variété de fonctions.

Ce but est atteint grâce au fait que le dispositif comprend un bornier qui est apte à être connecté avec le tableau de telle sorte que les mécanismes sont aptes à être actionnés par les actionneurs par l'intermédiaire du tableau, et un coffret amovible qui est destiné à être connecté avec le bornier de telle sorte que le bornier est une interface entre le tableau et le coffret, le dispositif étant apte à analyser ces données par l'intermédiaire du coffret, certaines au moins des connexions entre le coffret et le bornier étant redondantes de certaines au moins des connexions entre le bornier et le tableau de telle sorte que certains au moins des mécanismes sont aptes à être actionnés indépendamment par l'intermédiaire du tableau et par l'intermédiaire du coffret.

Grâce à ces dispositions, on peut aisément modifier les fonctions effectuées par le dispositif en enlevant le coffret amovible, et en le remplaçant par un autre coffret présentant des connexions différentes avec le bornier, et donc des connexions redondantes différentes. La conception du dispositif en deux éléments principaux, à savoir le bornier et le coffret avec le bornier jouant le rôle d'une interface entre le tableau et le coffret, confère une grande modularité à ce dispositif.

De plus, le caractère redondant des connexions apportées par le coffret permet d'enlever le coffret sans perturber le fonctionnement des récepteurs recueillant les données ni le fonctionnement des mécanismes, ce qui est essentiel au bon fonctionnement de la structure comportant le tableau.

Le coffret permet en outre d'ajouter des fonctions.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1A est un schéma logique d'un exemple d'un tableau selon l'art antérieur,
- la figure 1B est un schéma logique d'un bornier d'un dispositif selon l'invention connecté sur le tableau de la figure 1A,
- la figure 1C est une illustration schématique d'un coffret d'un dispositif selon l'invention connecté sur le bornier de la figure 1B,
- la figure 2 représente un bornier d'un dispositif selon l'invention,
- la figure 3 illustre l'assemblage d'un dispositif selon l'invention sur un tableau,
- la figure 4 illustre un dispositif selon l'invention, après son assemblage sur le tableau.

On considère une structure comportant un tableau central 90, et un certain nombre d'éléments qui sont tous reliés par des circuits à ce tableau 90. Cette structure est par exemple un bâtiment, tel qu'une habitation (maison, immeuble), usine, une partie d'un bâtiment (appartement, pièce), ou un ensemble de bâtiments.

Cette structure peut également être un véhicule, par exemple une voiture ou un avion.

L'invention est décrite ci-dessous dans le cas où la structure est une habitation, cependant l'invention s'applique également à toute autre structure.

Le tableau central 90 est relié à une source d'énergie. Dans le cas d'une habitation, cette énergie est électrique et est amenée au travers d'un réseau électrique externe à l'habitation.

Dans le cas d'un véhicule, cette énergie provient en général du dispositif de propulsion de ce véhicule (moteur, réacteur, batteries).

L'habitation comprend des mécanismes 40, des actionneurs 30, et des récepteurs 50, qui sont les éléments reliés au tableau 90 mentionnés plus haut. Ces liaisons sont réalisées par des circuits. Ces circuits sont de préférence (par souci de fiabilité) des circuits physiques tels que des câblages électriques, des fibres optiques.

On entend par actionneur un dispositif de commande qui est relié à un mécanisme qu'il commande, et qui est relié au tableau 90. Un actionneur est actionnable directement par l'utilisateur.

Par exemple, un actionneur est un interrupteur. Cet interrupteur peut ainsi commander par exemple une ampoule, ou un store électrique.

On entend par mécanisme un appareil ou un objet qui est commandable. Un mécanisme est commandable par un actionneur. Un mécanisme peut également être commandable par un capteur, comme on le verra ci-dessous.

Par exemple ce mécanisme est un store électrique, une ampoule, une électrovanne de coupure d'eau.

Un mécanisme peut en outre être actionnable manuellement par un utilisateur. Par exemple, une gâche électrique dans une serrure est actionnable à l'aide d'une clé.

Par exemple le mécanisme est une porte munie d'un bras électrique apte à ouvrir et fermer cette porte. La porte est ainsi commandable par un bouton (un actionneur) qui va actionner le bras qui va ouvrir ou fermer la porte. Alternativement, la porte est commandable par une cellule photoélectrique (récepteur, voir ci-dessous) placée au voisinage de la porte, qui détecte les mouvements et qui est relié au bras de la porte. Ainsi, le bras est actionné par les signaux émis par la cellule (et générés par la détection d'un mouvement) et ouvre la porte lorsque cette cellule détecte un individu qui s'approche de la porte.

On entend par récepteur un élément qui est apte à recueillir des données.

Par exemple, un récepteur est un capteur de données environnementales, tel qu'un capteur de température, un capteur de luminosité, un capteur de présence d'eau, un détecteur de fumée. Un capteur peut être relié à un mécanisme, ou n'être relié à aucun mécanisme.

Alternativement, un récepteur est un détecteur d'état qui est associé à un mécanisme et qui est apte à détecter un état d'un mécanisme, et à recevoir un retour d'état de ce mécanisme. Un détecteur est par exemple un détecteur de store ouvert/fermé, un détecteur de porte ouverte/fermée, un compteur du nombre de fois où une porte a été ouverte.

Ainsi, chacun des récepteurs 50 est soit un capteur, soit un détecteur d'état d'un mécanisme 40.

Ainsi, le tableau 90 est relié par des circuits à des actionneurs 30 et à des mécanismes 40, chaque circuit reliant un actionneur 30 au mécanisme 40 qui est destiné à être commandé par cet actionneur 30. Ainsi, par l'intermédiaire du tableau 90, lorsque l'utilisateur actionne un actionneur 30, le mécanisme 40 qui lui est associé est activé (commandé).

En outre, le tableau 90 est relié par des circuits à des récepteurs 50, de telle sorte que le tableau 90 est apte à recevoir des signaux provenant des récepteurs 50, ces signaux étant émis par les récepteurs 50 en réponse à des données externes (environnementales) reçues par ces récepteurs 50. Un ou plusieurs mécanismes 40 sont ainsi aptes à être actionnés en fonction de ces données dans le cas où des connexions qui relient les récepteurs 50 à ce (ou ces) mécanisme(s) 40 existent au niveau du tableau 90. Ces connexions peuvent exister ou ne pas exister selon les tableaux 90.

Les circuits (câblages) provenant des actionneurs 30, des mécanismes 40, et des récepteurs 50 parviennent au tableau 90. Le tableau 90 établit des connexions entre les mécanismes 40 et les actionneurs 30, et éventuellement (mais pas nécessairement) entre un ou plusieurs des récepteurs 50 et un ou plusieurs des mécanismes 40. Le tableau 90 permet donc le fonctionnement de l'installation.

Le dispositif 1 selon l'invention comprend un bornier 10 qui est apte à être connecté avec le tableau 90, de façon fixe ou amovible. Si le bornier 10 est connecté de façon amovible, il est aisé de le déconnecter et de le remplacer par un autre bornier 10 si nécessaire.

Les connexions entre les actionneurs 30 et les mécanismes 40 au niveau du tableau 90, et le cas échéant les connexions qui existent entre les récepteurs 50 et les mécanismes 40 au niveau du tableau 90, sont laissées intactes par le bornier 10, de telle sorte que lorsque le bornier 10 est connecté avec le tableau 90, les mécanismes 40 sont toujours (encore) actionnables par les actionneurs 30.

Après connexion du bornier 10 sur le tableau 90, un ou plusieurs des mécanismes 40 sont en outre éventuellement actionnables en réponse aux signaux reçus d'un ou plusieurs des récepteurs 50 si c'était déjà le cas avant la connexion du bornier 10 avec le tableau 90.

Le bornier 10 a essentiellement un rôle d'interface avec un coffret 20 (décrit ci-après).

Le dispositif selon l'invention comprend également un coffret 20 amovible qui est destiné à être connecté avec le bornier 10.

Le coffret 20 permet l'apport d'une fonction de commandes supplémentaires en créant des connexions redondantes de certaines des connexions existantes avec les mécanismes 40 au niveau du tableau 90, de telle sorte que certaines commandes des mécanismes 40 sont possibles par l'intermédiaire du coffret 20 en redondance des commandes par l'intermédiaire du tableau 90 seul.

On entend par « redondant » la capacité à réaliser la même action par des moyens différents (le tableau 90 apportant un premier moyen sous la forme d'une connexion, et le coffret 20 apportant un deuxième moyen sous la forme d'une connexion).

Le coffret 20 est ainsi apte à créer des connexions entre un (ou des) mécanisme(s) 40 et un (ou des) récepteur(s) 50.

En supplément, dans certaines situations, le coffret 20 permet l'apport de fonctions différentes et complémentaires de celles du bornier 10 ou de celles du tableau 90. Une telle situation sera décrite ci-dessous dans un exemple (troisième exemple).

Parmi les fonctions qui sont aptes à être apportées par le coffret 20, on trouve des actions d'information à l'intention d'un utilisateur, telles que l'émission d'alertes vers un utilisateur (notamment sur un dispositif mobile tel qu'un smartphone) et la communication de l'état de l'environnement en temps réel (position des actionneurs 30, données provenant des capteurs).

Ainsi, certains des mécanismes 40 sont aptes à être actionnés indépendamment par l'intermédiaire du tableau 90 grâce à des actionneurs 30 reliés au tableau 90, et par l'intermédiaire du coffret 20 grâce à des actionneurs différents qui sont soit déjà reliés au tableau 90, soit apportés par le coffret 20.

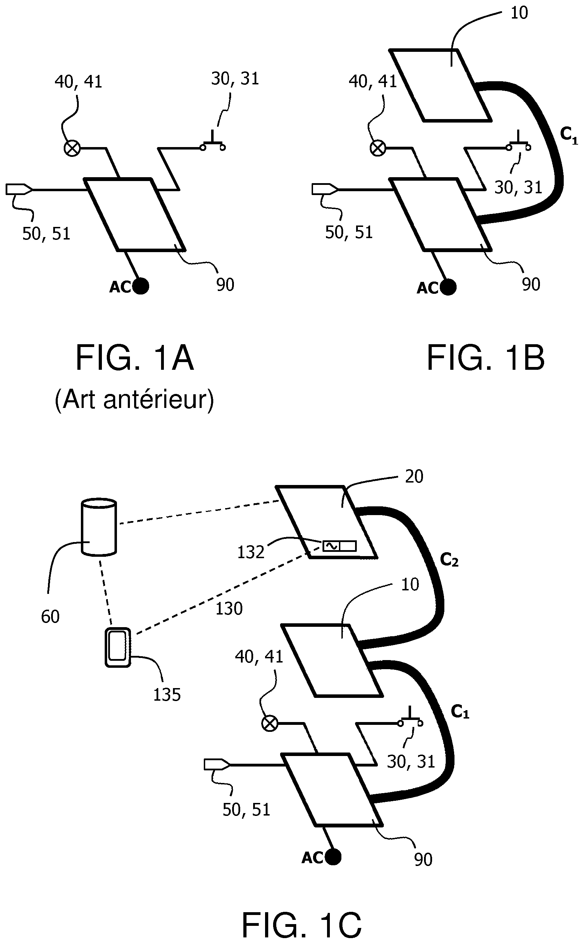

On décrit ci-dessous un exemple (premier exemple) de la structure et du fonctionnement d'un dispositif selon l'invention. Comme illustré sur les figures 1A, 1B, et 1C, le mécanisme 40 est une ampoule 41 destinée à éclairer une pièce. L'actionneur 30 associé à l'ampoule 41 est un interrupteur 31. La figure 1A montre schématiquement le circuit électrique reliant l'ampoule 41 à l'interrupteur 31 via le tableau 90, selon l'art antérieur, en l'absence de bornier 10. La référence AC désigne la source de courant électrique.

Un circuit relie le tableau 90 à un récepteur 50 qui est un détecteur d'état 51 qui est apte à donner l'état de l'ampoule 41 (allumée ou éteinte). Cette information ne sera disponible qu'une fois le coffret 20 connecté sur le bornier 10 connecté sur le tableau 90 (voir ci-après).

La figure 1B montre le circuit une fois le bornier 10 connecté avec le tableau 90.

Le bornier 10 est représenté schématiquement par un support. Les connexions qui ont été dupliquées et/ou ajoutées par rapport au tableau 90 seul et à ses circuits associés sont schématisées par une connexion globale (câble) C₁.

Les connexions sont telles que l'ampoule 41 est toujours commandable par l'interrupteur 31, le circuit connectant l'ampoule 41 et l'interrupteur 31 passant toujours par le tableau 90. Le bornier 10, avec ses connexions avec le tableau 90, n'entrave pas la commande de l'ampoule 41 par l'interrupteur 31.

La figure 1C montre les connexions une fois le coffret 20 connecté sur le bornier 10.

Le coffret 20 est représenté schématiquement par un support. Les connexions qui ont été dupliquées et/ou ajoutées par rapport à l'ensemble tableau 90 plus bornier 10 sont schématisées par une connexion globale (câble) C₂.

L'ampoule 41 est toujours commandable par l'interrupteur 31.

Le coffret 20 établit en outre une connexion qui relie l'ampoule 41 à un actionneur à distance 130. Cet actionneur à distance 130 comprend une base 132 portée par le coffret 20, et une télécommande 135 qui est relié par une liaison sans fil à la base 132. Ainsi, l'ampoule 41 est commandable soit par l'interrupteur 31, soit par la télécommande 135 par l'intermédiaire de la base 132.

Selon l'invention, la télécommande 135 est apte à actionner un mécanisme 40 (dans cet exemple l'ampoule 41) de plusieurs façons. En particulier, si la télécommande 135 est à portée du réseau sans fil local (appelé en anglais « Local Area Network » ou « LAN »), la télécommande 135 utilise ce réseau et actionne alors un mécanisme 40 directement et aussi rapidement que si l'utilisateur avait actionné un actionneur 30 en passant directement par le tableau 90.

Si en revanche la télécommande 135 est hors de portée du réseau sans fil local, la télécommande 135 utilise le réseau cellulaire ou le réseau sans fil externe (appelé en anglais « Wide Area Network » ou « WAN ») et actionne alors un mécanisme 40, la commande passant par ce réseau et par un serveur 60 (voir ci-dessous).

Le coffret 20 établit également par une connexion un circuit qui relie l'ampoule 41, via le tableau 90 et le bornier 10, au récepteur 50 qui est un détecteur d'état 51 qui donne l'état de l'ampoule 41 (allumée ou éteinte).

Dans l'exemple ci-dessus, un deuxième actionneur (130) est apporté par le coffret 20, permettant une commande de la lampe 41 redondante de la commande avec l'interrupteur 31 (premier actionneur).

Cet exemple illustre le cas où le dispositif selon l'invention comprend en outre un ou plusieurs actionneurs additionnels 130 qui sont aptes à commander un ou plusieurs des mécanismes 40 par l'intermédiaire du coffret 20 et non par l'intermédiaire du tableau 90 seul.

Dans d'autres cas, un deuxième actionneur est déjà relié au tableau 90 mais sa connexion avec un mécanisme 40 n'est activée qu'avec la connexion du coffret 20 sur le bornier 10.

On donne ci-après un deuxième exemple de fonctionnement d'un dispositif selon l'invention.

Dans une pièce de l'habitation dans laquelle est installé le dispositif selon l'invention, une ampoule (mécanisme) 41 est reliée au tableau 90 et est connectée au niveau du tableau 90 à un interrupteur 31 qui est relié au tableau 90. L'ampoule 41 peut donc être allumée ou éteinte par l'interrupteur 31 actionné par un utilisateur. Un capteur de présence (fonctionnant par exemple par infrarouge) et un capteur de luminosité sont situés dans cette pièce et sont également reliés au tableau 90. Ces capteurs ne sont pas activés au niveau du tableau 90, c'est-à-dire qu'ils ne sont pas connectés à l'ampoule 41. Ces capteurs n'ont donc pas d'action sur l'ampoule 41 lorsque le tableau 90 est seul.

Lorsque le bornier 10 est connecté sur le tableau 90 et le coffret 20 connecté sur le bornier 10, une connexion entre les capteurs et l'ampoule 41 est établie par le coffret 20. Ainsi, lorsqu'une personne entre dans la pièce (et est alors détectée par le capteur de présence) et que la luminosité dans la pièce (telle que détectée par le capteur de luminosité) est inférieure à un certain seuil prédéfini, un composant logique (informatique ou électronique) du coffret 20 analyse la situation, et l'ampoule 41 est allumée par l'intermédiaire du coffret 20.

Ainsi, le coffret 20 apporte une fonction supplémentaire sous la forme d'une alternative de commande de l'ampoule 41. L'utilisateur peut cependant choisir d'enlever ce coffret 20 et de connecter sur le bornier 10 un autre coffret 20 pour lequel la connexion entre les capteurs et l'ampoule 41 n'est pas établie.

Dans le premier et le deuxième exemple ci-dessus, les capteurs 50 sont reliés au tableau 90.

Alternativement, ces capteurs 50 peuvent être reliés par un réseau sans fil directement au coffret 20.

D'une manière générale, selon l'invention, certaines au moins des connexions entre le coffret 20 et le bornier 10 sont redondantes de certaines au moins des connexions entre le bornier 10 et le tableau 90 de telle sorte que certains au moins des mécanismes 40 sont aptes à être actionnés indépendamment d'une part par l'intermédiaire du tableau 90 (sans passer par le coffret 20), et d'autre part par l'intermédiaire du coffret 20.

En d'autres termes, les connexions avec les circuits menant à certains mécanismes 40 (ou éventuellement la totalité des mécanismes 40) réalisées par le coffret 20 sont redondantes des connexions avec ces circuits réalisés par le tableau 90, de telle sorte que le coffret 20 permet l'apport de fonctions supplémentaires (et notamment de possibilité de commande de ces mécanismes 40) qui n'existent pas si le coffret 20 n'est pas connecté au bornier 10 et au tableau 90.

Avantageusement, les connexions entre le tableau 90, le bornier 10, et le coffret 20 sont par contact physique.

Ainsi, on obtient une meilleure fiabilité et pérennité des connexions, et grande rapidité de transfert de l'information. On évite également les problèmes de portée et de latence liés aux connexions sans fil (notamment les connexions par transmission d'ondes électromagnétiques, en particulier par les fréquences utilisées dans les communications « bluetooth » ou « wifi »).

Par exemple, ces connexions sont électriques, c'est-à-dire s'effectuent par circulation d'un courant électrique dans des fils.

Alternativement, ces connexions s'effectuent par contact par un autre moyen, par exemple par transmission de lumière dans des fibres optiques, ou par transmission d'infrarouges.

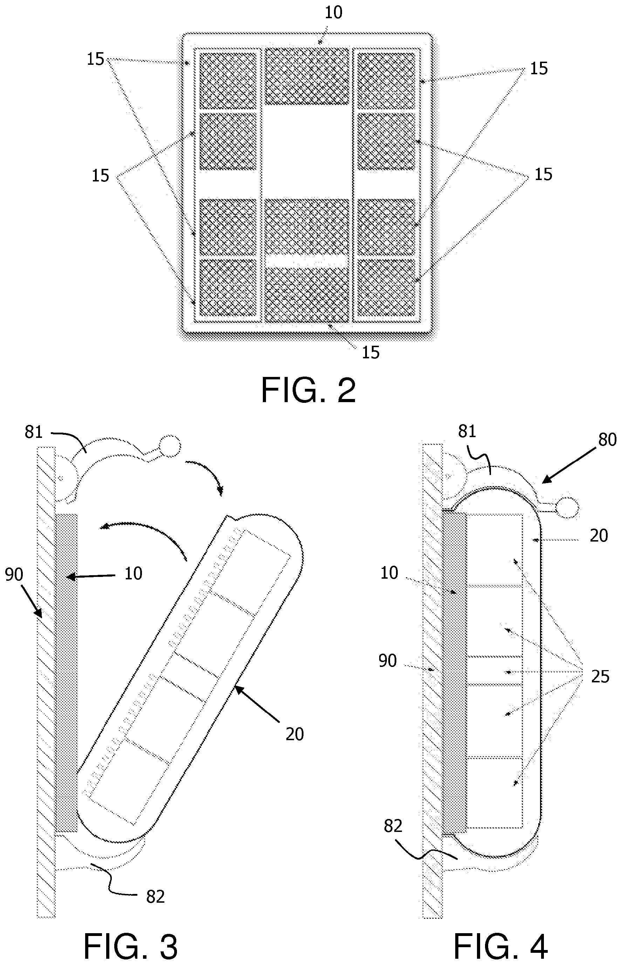

La figure 2 donne un exemple de bornier 10 selon l'invention, et montre la face avant du bornier 10, sur laquelle le coffret 20 est destiné à être connecté.

Le bornier 10 comprend plusieurs sous-borniers 15. Chaque sous-bornier 15 est raccordé, au travers du tableau 90, à un groupe spécifique distinct d'équipements de l'habitation : un ou plusieurs sous-borniers 15 est raccordé à des actionneurs 30, un ou plusieurs sous-borniers 15 est raccordé à des mécanismes 40, un ou plusieurs sous-borniers 15 est raccordé (dans cet exemple) à des récepteurs 50 (des capteurs ou des détecteurs d'état d'un mécanisme 40). Un sous-bornier 15 est raccordé à une alimentation (raccordement de puissance).

Les composants électriques/électroniques inclus dans un sous-bornier 15 sont disponibles dans le commerce. Leur présence et leur disposition dans un sous-bornier 15 est variable en fonction de l'habitation et des fonctionnalités du dispositif qui sont souhaitées.

Le bornier 10 est spécifique à l'habitation. Ainsi, l'agencement et le nombre des sous-borniers 15 composant le bornier 10 dépend de la nature (taille, équipements électriques présents) de l'habitation.

La figure 1B, décrite ci-dessus, fournit un exemple de réalisation d'un bornier 10 dans une application particulière simple.

La construction du bornier 10 comme un ensemble de sous-borniers 15 lui confère une modularité. En effet, si l'utilisateur ajoute des équipements (tels que des mécanismes 40) à son habitation, des sous-borniers 15 peuvent être ajoutés au bornier 10 afin d'être connectés à ces équipements. Une telle connexion avec ces équipements est possible dans le cas où l'habitation comporte des fourreaux placés le long des parois (par exemple dans les combles d'une maison) dans lesquels des câblages reliant ces équipements au tableau 90 peuvent être ajoutés. La connexion entre ces équipements et le bornier 10 s'effectue alors au niveau du tableau 90 lorsque le bornier 10 est connecté au tableau 90.

Selon l'invention, le dispositif comprend également un coffret 20 qui est connecté au bornier 10 en mode normal de fonctionnement du dispositif.

Avantageusement, le dispositif présente un mécanisme de verrouillage 80 du coffret 20 sur le bornier 10 une fois la connexion du coffret 20 sur le bornier 10 effectuée. Par exemple, ce mécanisme 80 comporte un rabat 81 articulé sur le tableau 90 et qui vient recouvrir le bord supérieur du coffret 20 après sa connexion avec le bornier 10 de façon à empêcher que le coffret 20 se détache du bornier 10.

En général, la connexion entre le coffret 20 et le bornier 10 s'effectue par une translation du coffret 20 perpendiculairement au bornier 10, puis le mécanisme de verrouillage 80 verrouille le coffret 20 sur le bornier 10.

En variante, la connexion entre le coffret 20 et le bornier 10 s'effectue par un pivotement du coffret 20 par rapport au bornier 10.

Le mécanisme de verrouillage 80 selon cette variante est illustré schématiquement sur les figures 3 et 4 qui montrent le coffret 20 avant et après son verrouillage sur le bornier 10, respectivement.

Le bord inférieur du coffret 20 est logé sur un support 82 fixé sur le tableau 90, de telle sorte que le coffret 20 est supporté par le support 82. Puis le coffret 20 est pivoté autour de son bord inférieur en direction du tableau 90 de telle sorte que le coffret 20 vienne épouser la face libre du bornier 10. Ainsi, chaque module 25 qui compose le coffret 20 vient se connecter avec le sous-bornier 15 du bornier 10 qui lui correspond. Puis le rabat 81 est rabattu afin de recouvrir le bord supérieur du coffret 20 et solidariser le coffret 20 sur le bornier 10. Les flèches sur la figure 3 indiquent ces mouvements du coffret 20 et du rabat 81.

Avantageusement, les bords supérieur et inférieur du coffret 20 sont cylindriques et les faces du rabat 81 et du support 82 qui sont respectivement en regard de ces bords sont conformés afin d'épouser ces bords et de faciliter le pivotement du coffret 20. Les parties mâles et femelles des connexions entre le coffret 20 et le bornier 10 sont rectilignes.

Alternativement, les parties mâles et femelles des connexions entre le coffret 20 et le bornier 10 sont courbes afin de s'insérer aisément l'une dans l'autre durant le pivotement du coffret 20.

Comme indiqué plus haut, le coffret 20, une fois qu'il est connecté au bornier 10, ajoute des fonctionnalités supplémentaires.

En particulier, le coffret 20 ajoute des fonctionnalités de surveillance, de sécurité, de confort, d'optimisation de la gestion énergétique de l'installation.

Les fonctionnalités pouvant être apportées par le coffret 20 ne sont pas limitées aux fonctionnalités listées ci-dessus. Le dispositif peut par ailleurs ne présenter que certaines, ou aucune, des fonctionnalités listées ci-dessus.

Comme indiqué plus haut, les mécanismes 40 sont aptes à être actionnés par les actionneurs 30 par l'intermédiaire du tableau 90. Dans certains cas particuliers, les mécanismes 40 peuvent être actionnés en fonction de données reçues par les récepteurs 50 et transmises sous forme de signaux au tableau 90 et au bornier 10 (voir troisième exemple ci-dessous). Ces actions sont des actions réflexes, automatiques.

Le coffret 20 ajoute une fonction d'analyse des données sur la base de scénarios et/ou d'algorithmes. Ainsi, le coffret 20 est apte à effectuer une analyse quantitative, plus fine, des données reçues par le coffret 20 (sous forme de signaux) à la lumière d'un ou plusieurs scénarios préexistants contenus dans une base de données. Sur la base des résultats de cette analyse, des actions peuvent être effectuées par l'intermédiaire du coffret 20 (voir troisième exemple ci-dessous).

Le traitement des données est par exemple effectué sur la base de seuils ou de fourchettes de valeurs fixées à l'avance.

Alternativement, ou en supplément, ces scénarios et/ou ces seuils ou fourchettes sont définis ou modifiés par l'utilisateur au moyen d'une télécommande.

Ainsi, les scénarios ne sont pas figés et sont paramétrables par l'utilisateur en fonction de ses souhaits.

Avantageusement, la base de données est hébergée sur un serveur 60 externe à l'habitation et qui est relié à distance au coffret 20 (Figure 1). Cette base de données est ainsi sécurisée et fiabilisée, et sa gestion est facilitée.

Ainsi, dans ce cas, le dispositif selon l'invention comprend en outre un serveur 60 distinct du bornier 10 et du coffret 20, les scénarios et/ou algorithmes étant hébergés sur le serveur 60 avec lequel le coffret 20 est apte à communiquer.

Chaque scénario correspond à une situation réelle concernant l'habitation ou l'utilisateur. Une fois le scénario le plus plausible identifié, le serveur 60 transmet un ordre au coffret 20 par l'intermédiaire duquel un ou plusieurs des mécanismes 40 sont actionnés via le bornier 10 afin de gérer cette situation. Alternativement, ou en supplément, le coffret 20 alerte directement l'utilisateur et/ou un tiers afin de l'informer des données collectées et du scénario probable identifié.

L'utilisateur et/ou le tiers sont ainsi aptes à intervenir dans l'habitation s'ils le jugent nécessaire ou pertinent.

Le serveur 60 est par conséquent optionnel, mais apporte des fonctionnalités supplémentaires au coffret 20.

Le serveur 60 stocke les fonctionnalités du coffret 20 qui correspondent à un utilisateur donné. Ainsi, si un utilisateur souhaite que ces fonctionnalités soient également disponibles dans une seconde structure autre que la première structure où est installé le coffret 20, ces fonctionnalités peuvent être transposées dans un second coffret qui sera installé dans cette seconde structure (cette seconde structure disposant également d'un bornier selon l'invention apte à recevoir ce second coffret).

Par exemple, grâce au serveur 60 du dispositif selon l'invention, une partie ou la totalité des fonctionnalités qui sont disponibles dans une première habitation est transposable dans une autre habitation de manière à y être disponible (cette autre habitation est par exemple une résidence secondaire, la première habitation étant la résidence principale de l'utilisateur).

Par exemple, grâce au serveur 60 du dispositif selon l'invention, une partie des fonctionnalités qui sont disponibles dans une habitation est transposable dans un véhicule, ce véhicule étant muni d'un bornier et d'un coffret spécifiques, qui sont distincts du bornier 10 et du coffret 20 de l'habitation.

En variante, l'analyse des données est effectuée par le serveur 60 et non par le coffret 20.

En variante, l'analyse des données est effectuée à la fois par le coffret 20 et par le serveur 60.

Avantageusement, l'analyse des données est effectuée en temps réel. Ainsi, une intervention immédiate est possible en cas de danger sur la base d'actions réflexes ou d'algorithmes.

Ainsi, selon l'invention, le traitement des données est effectué sur la base de scénarios et d'algorithmes.

Les actions effectuées par l'intermédiaire du coffret 20 peuvent également être demandées par l'utilisateur au moyen d'une télécommande. Par exemple ces actions sont d'allumer une lumière afin d'éclairer une pièce (comme expliqué dans le premier exemple ci-dessus), ou de démarrer un arroseur afin d'effectuer un arrosage d'une pelouse. Comme indiqué précédemment, le bornier 10 a en premier lieu un rôle d'interface avec le coffret 20. Cependant, dans certains cas particuliers, le bornier 10 apporte en outre une ou plusieurs fonctions supplémentaires à celles offertes par le tableau 90 seul.

On décrit ci-dessous, à titre de troisième exemple, le fonctionnement du dispositif selon l'invention dans une situation particulière où le bornier 10 apporte en outre par lui-même au moins une fonction (spécifique) supplémentaire de celles offertes par le tableau 90 seul, et où le coffret 20 apporte une fonction différente et complémentaire de la fonction supplémentaire apportée par le bornier 10.

Le résident de l'habitation dans laquelle est installé le dispositif selon l'invention a un brusque souci de santé ou un accident (par exemple une chute) qui entraine sa perte de connaissance tandis qu'un robinet d'eau est ouvert parce que ce résident l'utilisait.

L'eau déborde, ce qui déclenche un capteur de débordement d'eau (récepteur 50) qui est connecté au tableau 90 et au bornier 10, et qui envoie alors un signal au bornier 10. En réaction, le bornier 10 ferme une électrovanne (mécanisme 40) qui est connectée au tableau 90 et au bornier 10, et qui est montée sur le tuyau d'alimentation en eau du robinet. Cette fermeture de l'électrovanne coupe immédiatement l'arrivée d'eau. Ainsi, le bornier 10 établit une connexion entre le capteur de débordement d'eau et l'électrovanne, cette connexion n'existant pas au niveau du tableau 90 seul (l'électrovanne n'était actionnable que par un interrupteur (actionneur 30)). En parallèle, en réponse au signal émis par le récepteur 50, le coffret 20 envoie une alarme sur le téléphone portable du résident. Si, au bout d'un temps donné fixé préalablement, le résident ne désactive pas cette alarme depuis son téléphone portable, le coffret 20 transmet ces informations (débordement d'eau, absence de réponse à l'alarme) au serveur 60. Le serveur 60 analyse ces informations, et identifie que la situation correspond au scénario d'une perte de connaissance du résident. En réaction, le serveur 60 envoie un signal à un tiers (famille du résident, médecin) afin que ce dernier puisse intervenir physiquement. Ainsi, le bornier 10 ajoute par lui-même une fonction d'intermédiaire de commande, et le coffret 20 ajoute une fonction d'alerte qui est complémentaire et distincte de la fonction du bornier 10.

Selon un mode de réalisation particulier, le dispositif selon l'invention comprend en outre un ou plusieurs mécanismes additionnels qui sont aptes à être commandés par l'intermédiaire du coffret 20 (et non par l'intermédiaire du tableau 90 seul).

Ces mécanismes additionnels sont distincts des mécanismes 40 décrits ci-dessus car ils ne sont pas aptes à être commandés par l'intermédiaire du tableau 90 seul. Ces mécanismes additionnels peuvent cependant être reliés au tableau (soit par un câblage, soit par « POE » (Power Over Ethernet) c'est-à-dire sans fil par Ethernet) pour leur alimentation électrique.

Ce mode de réalisation particulier de l'invention présente l'avantage d'apporter à l'habitation des fonctionnalités qui ne sont pas disponibles par le seul tableau 90 et les mécanismes 40 reliés au tableau 90. Avantageusement, le dispositif comprend en outre un serveur 60 qui communique avec le coffret 20 et qui augmente les capacités d'analyse du coffret 20.

On décrit maintenant, à titre de quatrième exemple, le fonctionnement du coffret 20 selon ce mode de réalisation particulier. Une caméra (mécanisme additionnel) est située dans une pièce et est reliée directement au coffret 20. Lorsque qu'une ampoule 41 située dans la pièce (mécanisme 40 relié au tableau 90) est allumée (ou qu'un détecteur de présence 50 est activé), le coffret 20 prend connaissance de cet allumage de l'ampoule 41, et transmet cette information au serveur 60. Après analyse de la situation, le serveur 60 envoie, via le coffret 20, un signal à la caméra pour activer celle-ci et l'orienter vers la région de la pièce qui est illuminée par l'ampoule 41 (ou vers la région de la pièce où se situe le détecteur de présence 50).

Ainsi, dans l'hypothèse où un intrus s'est introduit dans la pièce et a allumé la lumière (fournie par l'ampoule 41) dans une région de la pièce (ou a activé le détecteur de présence 50), les actions de l'intrus sont enregistrées par la caméra.

Selon l'invention, le coffret 20 est spécifique à l'habitation et son paramétrage est propre à l'utilisateur (habitant).

En effet, le coffret 20 présente une modularité dans le positionnement des différents modules 25 qui le constituent (voir figure 4), de telle sorte que certaines connexions avec le bornier 10 peuvent être activées tandis que d'autres sont désactivées selon le mode de vie et les habitudes du résident. Ainsi, le coffret 20 est configurable, et adaptable aux besoins du résident de l'habitation.

Les composants électriques/électroniques inclus dans un module 25 sont disponibles dans le commerce. Leur présence et leur disposition dans un module 25 est variable en fonction de l'habitation et des fonctionnalités du dispositif qui sont souhaitées. La figure 1C fournit un exemple de réalisation dans une application particulière.

La géométrie des modules 25 et des sous-borniers 15 est adaptée de façon à permettre leurs connexions respectives, et à minimiser l'encombrement du bornier 10 et du coffret 20.

En cas de changement de résident, ou de modification de ses habitudes, il suffit de modifier la programmation du coffret 20, sans qu'il soit nécessaire de modifier le bornier 10.

Pour modifier la programmation du coffret 20, on peut configurer (y compris à distance à l'aide du serveur 60) le coffret 20 afin de modifier ses connexions avec le bornier 10 et par conséquent les actions qui peuvent être effectuées par l'intermédiaire du dispositif et les fonctions prises en charge par le dispositif. Ces modifications (notamment leur activation ou désactivation) des connexions peuvent s'effectuer par exemple par modifications de paramètres concernant ces connexions. Par exemple, ces modifications des paramètres s'effectuent à l'aide d'une interface homme/machine (clavier et ordinateur) avec le serveur 60, cette interface faisant alors partie du dispositif selon l'invention.

Alternativement, on peut aisément modifier les fonctions effectuées par l'intermédiaire du dispositif en enlevant le coffret 20 amovible, et en le remplaçant par un autre coffret présentant des connexions différentes avec le bornier 10. Ceci est un avantage du système bornier-coffret selon l'invention.

Avantageusement, toutes les connexions entre le coffret 20 et le bornier 10 s'effectuent par coopération simple (par exemple enfoncement de parties males dans des parties femelles) lorsque le coffret 20 est appuyé contre le bornier.

Ainsi, l'enlèvement d'un coffret 20 ou son remplacement par un autre coffret 20 est rapide et facile, et peut être effectué directement par l'utilisateur, sans intervention d'un spécialiste.

Avantageusement, le dispositif selon l'invention est apte à interagir avec la majorité des récepteurs 50, des actionneurs 30, et des mécanismes 40 qui sont communément disponibles dans le commerce. Ainsi, le dispositif est transposable à la quasi-totalité des habitations existantes, et la compatibilité du dispositif selon l'invention est optimale.

## Revendications

1. Dispositif destiné à être connecté sur un tableau (90) qui est relié par des circuits à des actionneurs (30), à des mécanismes (40), et à des récepteurs (50) aptes à recevoir des données, de telle sorte que le tableau (90) est apte à recevoir des signaux provenant des récepteurs (50), ces signaux étant émis par les récepteurs (50) en réponse à des données externes reçues par ces récepteurs (50), et que un ou plusieurs mécanismes (40) sont ainsi aptes à être actionnés en fonction de ces données, ce dispositif étant **caractérisé en ce qu'**il comprend un bornier (10) qui est apte à être connecté avec ledit tableau (90) de telle sorte que lesdits mécanismes (40) sont encore aptes à être actionnés par lesdits actionneurs (30) par l'intermédiaire dudit tableau (90), et un coffret (20) amovible qui est destiné à être connecté avec ledit bornier (10) de telle sorte que ledit bornier (10) est une interface entre ledit tableau (90) et ledit coffret (20), ledit dispositif étant apte à analyser lesdites données par l'intermédiaire dudit coffret (20), certaines au moins des connexions entre ledit coffret (20) et ledit bornier (10) étant redondantes de certaines au moins des connexions entre ledit bornier (10) et ledit tableau (90) permettant l'apport de fonctions de commandes supplémentaires de telle sorte que certains au moins desdits mécanismes (40) sont aptes à être actionnés indépendamment par l'intermédiaire dudit tableau (90) et par l'intermédiaire dudit coffret (20), ledit bornier (10) et/ou ledit coffret (20) permettant l'actionnement desdits mécanismes (40) par lesdits récepteurs (50).

2. Dispositif selon la revendication 1, **caractérisé en ce que** l'analyse desdites données est effectuée en temps réel.

3. Dispositif selon la revendication 1, **caractérisé en ce que** l'analyse desdites données est effectuée sur la base de scénarios et d'algorithmes.

4. Dispositif selon la revendication 3, **caractérisé en ce qu'**il comprend en outre un serveur (60) distinct dudit bornier (10) et dudit coffret (20), lesdits scénarios et algorithmes étant hébergés sur ledit serveur (60) avec lequel ledit coffret (20) est apte à communiquer.

5. Dispositif selon la revendication 4, **caractérisé en ce que** l'analyse desdites données est effectuée par ledit serveur (60).

6. Dispositif selon l'une quelconque des revendications 1 à 5, **caractérisé en ce que** l'analyse desdites données est effectuée par ledit coffret (20).

7. Dispositif selon l'une quelconque des revendications 1 à 6, **caractérisé en ce que** chacun desdits récepteurs (50) est soit un capteur soit un détecteur d'état desdits mécanismes (40).

8. Dispositif selon l'une quelconque des revendications 1 à 7, **caractérisé en ce que** les connexions entre ledit tableau (90), ledit bornier (10) et ledit coffret (20) sont par contact physique.

9. Dispositif selon la revendication 8, **caractérisé en ce que** lesdites connexions sont électriques.

10. Dispositif selon l'une quelconque des revendications précédentes, **caractérisé en ce qu'**il comprend en outre un ou plusieurs actionneurs additionnels (130) qui sont aptes à commander un ou plusieurs desdits mécanismes (40) par l'intermédiaire dudit coffret (20) et non par l'intermédiaire du tableau (90) seul.

11. Dispositif selon l'une quelconque des revendications précédentes, **caractérisé en ce qu'**il comprend en outre un ou plusieurs mécanismes additionnels qui sont aptes à être commandés par l'intermédiaire dudit coffret (20) et non par l'intermédiaire du tableau (90) seul.

12. Dispositif selon l'une quelconque des revendications précédentes, caractérisé en ce ledit bornier (10) apporte en outre au moins une fonction supplémentaire de celles offertes par ledit tableau (90) seul, et en ce que le coffret (20) apporte une fonction différente et complémentaire de ladite fonction supplémentaire apportée par ledit bornier (10).

## Patentansprüche

1. Vorrichtung, die dazu bestimmt ist, auf einer Schalttafel (90) verbunden zu werden, die durch Schaltkreise mit Aktuatoren (30), mit Mechanismen (40) und mit Empfangseinrichtungen (50), die zum Empfangen von Daten in der Lage sind, verbunden ist, dergestalt, dass die Schalttafel (90) zum Empfangen von Signalen in der Lage ist, die ausgehend von den Empfangseinrichtungen (50) empfangen werden, wobei diese Signale durch die Empfangseinrichtungen (50) als Reaktion auf externe Daten gesendet werden, die durch diese Empfangseinrichtungen (50) empfangen werden, und dass ein oder mehrere Mechanismen (40) so in der Lage sind, in Abhängigkeit von diesen Daten betätigt zu werden, wobei die Vorrichtung **dadurch gekennzeichnet ist, dass** sie eine Klemmleiste (10) umfasst, die in der Lage ist, mit der Schalttafel (90) verbunden zu werden, dergestalt, dass die Mechanismen (40) noch in der Lage sind, durch die Aktuatoren (30) mittels der Schalttafel (90) betätigt zu werden, und einen abnehmbaren Schaltkasten (20), der dazu bestimmt ist, mit der Klemmleiste (10) verbunden zu werden, dergestalt, dass die Klemmleiste (10) eine Schnittstelle zwischen der Schalttafel (90) und dem Schaltkasten (20) ist, wobei die Vorrichtung in der Lage ist, die Daten mittels des Schaltkastens (20) zu analysieren, wobei wenigstens bestimmte der Verbindungen zwischen dem Schaltkasten (20)und der Klemmleiste (10) redundant zu wenigstens bestimmten der Verbindungen zwischen der Klemmleiste (10) und der Schalttafel (90) sind, was die Bereitstellung von zusätzlichen Steuerfunktionen gestattet, dergestalt, dass wenigstens bestimmte der Mechanismen (40) in der Lage sind, unabhängig mittels der Schalttafel (90) und mittels des Schaltkastens (20) betätigt zu werden, wobei die Klemmleiste (10) und/oder der Schaltkasten (20) die Betätigung der Mechanismen (40) durch die Empfangseinrichtungen (50) gestattet.

2. Vorrichtung nach Anspruch 1, **dadurch gekennzeichnet, dass** die Analyse der Daten in Echtzeit durchgeführt wird.

3. Vorrichtung nach Anspruch 1, **dadurch gekennzeichnet, dass** die Analyse der Daten auf der Basis von Szenarien und von Algorithmen durchgeführt wird.

4. Vorrichtung nach Anspruch 3, **dadurch gekennzeichnet, dass** sie ferner einen Server (60) umfasst, der von der Klemmleiste (10) und von dem Schaltkasten (20) verschieden ist, wobei die Szenarien und Algorithmen auf dem Server (60) untergebracht sind, mit dem der Schaltkasten (20) in der Lage ist zu kommunizieren.

5. Vorrichtung nach Anspruch 4, **dadurch gekennzeichnet, dass** die Analyse der Daten durch den Server (60) durchgeführt wird.

6. Vorrichtung nach einem der Ansprüche 1 bis 5, **dadurch gekennzeichnet, dass** die Analyse der Daten durch den Schaltkasten (20) durchgeführt wird.

7. Vorrichtung nach einem der Ansprüche 1 bis 6,
**dadurch gekennzeichnet, dass** jede der Empfangseinrichtungen (50) entweder ein Sensor oder ein Detektor für den Zustand der Mechanismen (40) ist.

8. Vorrichtung nach einem der Ansprüche 1 bis 7,
**dadurch gekennzeichnet, dass** die Verbindungen zwischen der Schalttafel (90), der Klemmleiste (10) und dem Schaltkasten (20) über physischen Kontakt erfolgen.

9. Vorrichtung nach Anspruch 8, **dadurch gekennzeichnet, dass** die Verbindungen elektrisch sind.

10. Vorrichtung nach einem der vorhergehenden Ansprüche, **dadurch gekennzeichnet, dass** sie ferner einen oder mehrere zusätzliche Aktuatoren (130) umfasst, die in der Lage sind, einen oder mehrere der Mechanismen (40) mittels des Schaltkastens (20) und nicht mittels der Schalttafel (90) allein zu steuern.

11. Vorrichtung nach einem der vorhergehenden Ansprüche, **dadurch gekennzeichnet, dass** sie ferner einen oder mehrere zusätzliche Mechanismen umfasst, die in der Lage sind, mittels des Schaltkastens (20) und nicht mittels der Schalttafel (90) allein gesteuert zu werden.

12. Vorrichtung nach einem der vorhergehenden Ansprüche, **dadurch gekennzeichnet, dass** die Klemmleiste (10) ferner wenigstens eine zusätzliche Funktion zu den durch die Schalttafel (90) allein angebotenen bereitstellt, und dadurch, dass der Schaltkasten (20) eine Funktion bereitstellt, die zu der zusätzlichen Funktion, die durch die Klemmleiste (10) bereitgestellt wird, unterschiedlich und komplementär ist.

## Claims

1. Device intended to be connected to a board (90) which is connected by circuits to actuators (30), to mechanisms (40), and to receivers (50) able to receive data, so that the board (90) is able to receive signals from receivers (50), these signals being transmitted by receivers (50) in response to external data received by these receivers (50), and that one or more mechanisms (40) are thus able to be actuated as a function of these data, this device being **characterized in that** it comprises a terminal block (10) which is adapted to be connected with said board (90) so that said mechanisms (40) are still capable of being actuated by said actuators (30) via said board (90), and a removable box (20) which is intended to be connected with said terminal block (10) so that said terminal block (10) is an interface between said board (90) and said box (20), said device being able to analyze said data via said box (20), at least some of the connections between said box (20) and said terminal block (10) being redundant of at least some of the connections between said terminal block (10) and said board (90) allowing providing additional control functions such that at least some of said mechanisms (40) are able to be actuated independently by means of said board (90) and by means of said box (20), said terminal block (10) and/or said box (20) allowing the actuation of said mechanisms (40) by said receivers (50).

2. Device according to claim 1, **characterized in that** the analysis of said data is carried out in real time.

3. Device according to claim 1, **characterized in that** the analysis of said data is carried out on the basis of scenarios and algorithms.

4. Device according to claim 3, **characterized in that** it further comprises a server (60) separate from said terminal block (10) and from said box (20), said scenarios and algorithms being hosted on said server (60) with which said box (20) is able to communicate.

5. Device according to claim 4, **characterized in that** the analysis of said data is performed by said server (60).

6. Device according to any one of claims 1 to 5, **characterized in that** the analysis of said data is carried out by said box (20).

7. Device according to any one of claims 1 to 6, **characterized in that** each of said receivers (50) is either a sensor or a state detector of said mechanisms (40).

8. Device according to any one of claims 1 to 7, **characterized in that** the connections between said board (90), said terminal block (10) and said box (20) are by physical contact.

9. Device according to claim 8, **characterized in that** said connections are electrical.

10. Device according to any one of the preceding claims, **characterized in that** it further comprises one or more additional actuators (130) which are able to control one or more of said mechanisms (40) via said box (20) and not via the board (90) alone.

11. Device according to any one of the preceding claims, **characterized in that** it further comprises one or more additional mechanisms which are able to be controlled by means of said box (20) and not by means of the board (90) alone.

12. Device according to any one of the preceding claims, **characterized in that** said terminal block (10) also provides at least one additional function to those offered by said board (90) alone, and **in that** the box (20) provides a different and complementary function of said additional function provided by said terminal block (10).
